# EUROPEAN PATENT SPECIFICATION

(11) **EP 3 239 677 B1**
(45) Date of publication and mention of the grant of the patent: **25.11.2020**
(21) Application number: 15871596.1
(22) Date of filing: 21.05.2015
(51) Int. Cl.: G01L 3/10, G01B 7/30

(54) **MAGNETIC CIRCUIT STRUCTURE OF MAGNETIC SENSITIVE TORQUE SENSOR**
MAGNETISCHE KREISSTRUKTUR EINES MAGNETISCHEN EMPFINDLICHEN DREHMOMENTSENSORS
STRUCTURE DE CIRCUIT MAGNÉTIQUE DE CAPTEUR DE COUPLE MAGNÉTO-SENSIBLE

(30) Priority: 26.12.2014 CN 201410824363; 26.12.2014 CN 201420840439 U
(43) Date of publication of application: 01.11.2017
(73) Proprietor: Nanjing Huamin Electronics Co. Ltd., Nanjing, Jiangsu 210036 (CN)
(72) Inventor: SUN, Zengzhi, Nanjing Jiangsu 210036 (CN); JIANG, Jianping, Nanjing Jiangsu 210036 (CN)
(74) Representative: Proi World Intellectual Property GmbH
(86) International application number: PCT/CN2015/079462
(87) International publication number: WO 2016/101520

(56) References cited:
- EP-A2- 2 270 456
- EP-A2- 2 664 906
- CN-A- 102 749 160
- CN-A- 103 085 873
- CN-A- 103 808 443
- CN-U- 204 461 657
- JP-A- 2013 195 108
- KR-A- 20020 060 551

## Description

### BACKGROUND

### Technical Field

The present invention relates to sampling technologies of position sensors, and specifically, to a magnetic circuit structure of a magnetic sensitive torque sensor, and is applicable to measurement of angular displacement of a rotating shaft torque, and in particular, applicable to a torque sensor in an electric power steering system.

### Related Art

An electric power steering system has prominent advantages in energy saving and environment protection. A torque sensor, as a key component of the electric power steering system, is a focus of sensor research. At present, most torque sensors implement torque sensing by means of relative angular displacement. Main types of the torque sensors include: magnetic sensitive type, potentiometer type, inductive type, capacitive type, magnetostrictive type, photoelectric type, and the like. The magnetic sensitive type has various advantages such as a relatively simple structure and a good price performance ratio, and has promising application prospects.

A magnetic sensitive torque sensor generally has two rotor structures capable of rotating relative to each other, on which a permanent magnet and a magnetic conductor are mounted respectively. A magnetic sensitive element is disposed in a magnetic circuit of the sensor, for detecting a flux change generated by angular displacement between rotating axes. The quality of the magnetic circuit structure is decisive for the quality of the magnetic sensitive torque sensor. Upon search, related patents are as follows:
US Patent with NO. US6810336 B2 describes three structures of a magnetic sensitive torque sensor: In the first embodiment, a multi-polar magnetic ring that is magnetized in the axial direction is used. A gap between a magnetic sensitive element and a flux concentration ring is large, causing a very large magnetic resistance of a magnetic circuit. In the second embodiment, a multi-polar magnetic ring that is magnetized in the axial direction is also used, where a bunch ring is added outside the outer diameter of the flux concentration ring in the first embodiment. A relatively large gap is required between the bunch ring and the flux concentration ring, and a random change in the gap in a vibrating environment may cause a random flux fluctuation of a magnetic circuit, and the space in the sensor needs to be increased. In the third embodiment, a multi-polar magnetic ring that is magnetized in the radial direction is used. A tooth top end face of a flux concentration ring is used to collect flux, and the flux collection efficiency is relatively low due to restriction of the thickness of the flux concentration ring.

US Patent with NO. US6912923 B2 describes a flux concentrator structure of a magnetic sensitive torque sensor. The flux concentrator of the magnetic sensitive torque sensor includes two pairs of recesses, and two magnetic concentration rings are respectively disposed between each pair of the recesses, whereof the objective lies in that during vibration, changes in the gaps at two sides of the magnetic concentration ring compensate for each other, thereby reducing impact of the gap change on the flux. In this design, the gaps at two sides of the flux concentration ring are connected in parallel. In a balanced state, magnetic resistances R of the gaps at two sides of the flux concentration ring are equal, and the parallel gap magnetic resistance is R/2. When vibration occurs, magnetic resistances of the gaps at two sides of the flux concentration ring are not equal. The magnetic resistance of a gap at one side is greater than R, and the magnetic resistance of a gap at the other side is less than R, causing that the parallel gap magnetic resistance is less than R/2 obtained in the balanced state. The magnetic resistances of the gaps change along with vibration, and the flux changes accordingly.

Chinese Patent with NO. CN100468024 C describes a torque sensor using a multi-polar magnetic ring that is magnetized in the radial direction. A flux concentration ring of the torque sensor includes bent flux concentration teeth, flux concentration teeth of two flux concentration rings need to be distributed in a zig-zag manner, and there is a magnetic short circuit effect between adjacent flux concentration teeth. If the area of the flux concentration teeth is small, the flux collection efficiency is low; if the area of the flux concentration teeth is large, the magnetic short circuit impact is prominent. In this magnetic circuit structure, the conflict between the flux collection efficiency and the magnetic short circuit effect cannot be resolved, a molding process is relatively complex, and the occupied space is relatively large. The three structures described above each have various technical problems, in particular with the low flux collection efficiency. With regard to the technical problem, continuous attempts are made by persons of ordinary skill in the art, but the results are not desirable. Further state of the art is known from EP 2 270 456 A2 and EP 2 664 906 A2.

### SUMMARY

To resolve the existing problem, the present invention discloses a magnetic circuit structure of a magnetic sensitive torque sensor according to claim 1.

As an improvement of the present invention, the measurement gap between the focusing planes of the two column-type bunchers is greater than or equal to the height of the magnetic sensitive element.

As an improvement of the present invention, when a PCB on which a magnetic sensitive element is soldered needs to be disposed in the measurement gap, mounting through holes are provided on the PCB, so that the focusing planes of the flux bunchers pass through the PCB, to reach a package plane of the magnetic sensitive element. In the prior art, no mounting through hole is designed on a PCB of a flux buncher, and a measurement gap is equal to the sum of the height of a magnetic sensitive element and the thickness of the PCB. Generally, the thickness of the PCB is close to the height of the magnetic sensitive element, and therefore, the measurement gap is approximately equal to twice of the height of the magnetic sensitive element. A larger gap indicates a larger magnetic resistance, larger flux divergence, and a lower density of flux passing through a sensitive region of the magnetic sensitive element. As a result, the flux acquisition efficiency is lower. In the technical solution, the measurement gap is decreased, so that magnetic resistance and flux divergence become small, thereby greatly increasing the flux acquisition efficiency.

As an improvement of the present invention, a fitting portion is disposed on the multi-polar magnetic ring of the magnetic rotor structure, and a fitting portion is disposed on the bracket; the fitting portions are shaped into a recess and a raised edge that fit with each other; and the number of the fitting portions is greater than or equal to 1. The multi-polar magnetic ring and the bracket of the magnetic rotor include corresponding fitting portions that match with each other, and a magnetic pole reference position of the multi-polar magnetic ring is fixed by using the fitting portions, so that the production and assembly efficiency and product consistency of sensor can be improved.

As an improvement of the present invention, the coupling gaps between the acquisition planes of the column-type bunchers and the flux concentration rings are directly connected in series. During axial vibration, the two coupling gaps synchronously change along with the axial vibration, with reverse directions and identical magnitude, and the sum of the two coupling gaps is kept unchanged, so as to keep stability of flux on the acquisition plane.

As an improvement of the present invention, the bunch plane is shaped into one of a cylinder or a conoid, and the acquisition plane is shaped into one of a sector, a circle, an ellipse, or an irregular shape.

Compared with the prior art, the present invention has the following advantages: (1) The entire device is cleverly designed, and has a compact structure and a small volume. (2) In the technical solution, the flux acquisition structure uses a column-type buncher, which does not have a deformation such as bending or extension. Compared with a sheet-type buncher used in the prior art, the column-type buncher in the present invention has a short flux path, small flux divergence along the flux path, and small magnetic short circuit impact, and has a simple structure and a small volume, without extension outside the space defined by the ring width of the flux concentration ring, thereby improving flux acquisition efficiency. (3) In the technical solution, the acquisition planes of the column-type bunchers fully fall within the ring widths of the flux concentration rings, and during radial vibration, the acquisition planes do not go beyond the ring widths of the flux concentration rings, so as to keep stability of flux on the acquisition planes. (4) In the technical solution, the acquisition plane, the bunch plane, and the focusing plane of the column-type buncher are designed in structures whose areas gradually decrease, so that after the density of the flux collected by the acquisition plane is narrowed and enhanced in multiple stages, the flux gathers in the sensitive region of the magnetic sensitive element, thereby improving the flux acquisition efficiency. (5) The multi-polar magnetic ring and the bracket of the magnetic rotor include corresponding fitting portions that match with each other, and a magnetic pole reference position of the multi-polar magnetic ring is fixed by using the fitting portions, so that the production and assembly efficiency and product consistency of sensor can be improved. (6) In the technical solution, the coupling gaps between the acquisition planes of the column-type bunchers and the flux concentration rings are directly connected in series. During axial vibration, the two coupling gaps synchronously change along with the axial vibration, with reverse directions and identical magnitude, and the sum of the two coupling gaps is kept unchanged, so as to keep stability of flux on the acquisition plane.

### BRIEF DESCRIPTION OF THE DRAWINGS

FIG. 1 is a schematic diagram of a flux acquisition structure;
FIG. 2 to FIG. 5 are schematic structural diagrams of a column-type buncher;
FIG. 6 and FIG. 7 are schematic structural diagrams of a column-type buncher provided with a magnetic sensitive element;
FIG. 8 and FIG. 9 are schematic structural diagrams of a column-type buncher;
FIG. 10 to FIG. 13 are schematic structural diagrams of another embodiment of a column-type buncher;
FIG. 14 is a schematic diagram of a magnetic rotor structure;
FIG. 15 is a schematic diagram of a flux concentration rotor structure; and
FIG. 16 is a schematic diagram of a magnetic circuit structure of a magnetic sensitive torque sensor.

In the figures:
10. magnetic rotor structure; 11. multi-polar magnetic ring; H. height of a multi-polar magnetic ring; 12. magnetic ring fitting portion; 13. magnetic rotor bracket; 14. bracket fitting portion; 20. flux concentration rotor structure; 21, 22. flux concentration ring; 23. radial inner tooth; W. ring width of a flux concentration ring; θ. sector angle of a radial inner tooth; 30. flux acquisition structure; 31, 32. column-type buncher; 33. acquisition plane; 34. bunch plane; 35. focusing plane; 40. measurement gap; 41. coupling gap; 50. magnetic sensitive element; 51. sensitive region; h. height of magnetic sensitive element; d. center distance of the sensitive region; 52. PCB; and 53. PCB through hole.

### DETAILED DESCRIPTION

To enhance comprehension and understanding of the present invention, the following further describes the present invention with reference to the accompanying drawings and specific implementations.

### Embodiment 1:

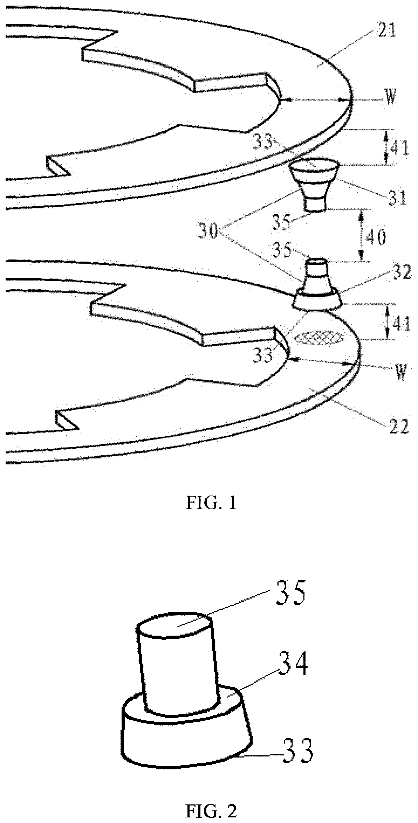

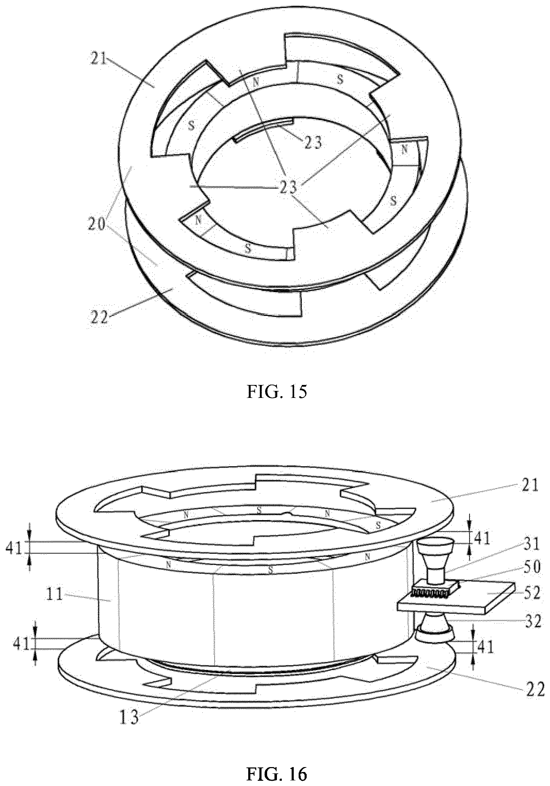

Referring to FIG. 1 and FIG. 16, a magnetic circuit structure of a magnetic sensitive torque sensor is provided. The magnetic circuit structure includes a flux acquisition structure 30, a magnetic rotor structure 10, and a flux concentration rotor structure 20. The flux acquisition structure includes two column-type bunchers 31 and 32 symmetrically disposed at two sides of a measurement gap 40. The column-type buncher includes one acquisition plane 33, at least one bunch plane 34, and at least one focusing plane 35. The magnetic rotor structure 10 includes a multi-polar magnetic ring 11 and a bracket 13. The flux concentration rotor structure 20 includes flux concentration rings 21 and 22. The multi-polar magnetic ring 11 and the bracket 13 are disposed between the flux concentration ring 21 and the flux concentration ring 22. In FIG. 1, the flux acquisition structure 30 includes two column-type bunchers 31 and 32. The acquisition planes 33 of the column-type bunchers acquire flux from the flux concentration rings 21 and 22 by means of coupling gaps 41. The dashed circle on the flux concentration ring 22 represents a projection of the acquisition plane 33 of the column-type buncher 32. The acquisition planes 33 fully fall within the ring widths W of the flux concentration rings 21 and 22. The measurement gap 40 is between the focusing planes 35 of the two column-type bunchers. In the technical solution, the flux acquisition structure uses a column-type buncher, which does not have a deformation such as bending or extension. Compared with a sheet-type buncher used in the prior art, the column-type buncher in the present invention has a short flux path, small flux divergence along the flux path, and small magnetic short circuit impact, and has a simple structure and a small volume, without extension outside the space defined by the ring width of the flux concentration ring, thereby improving flux acquisition efficiency.

### Embodiment 2:

Referring to FIG. 1, FIG. 15, and FIG. 16, as an improvement of the present invention, the column-type bunchers 31 and 32 are disposed in annular spaces defined by the ring widths W of the flux concentration rings 21 and 22 and have no extension or deformation outside the annular spaces. During radial vibration, the acquisition planes do not go beyond the ring widths of the flux concentration rings, so as to keep stability of flux on the acquisition planes. The acquisition planes 33 of the column-type bunchers acquire, by means of the coupling gaps 41, flux concentrated by radial inner teeth 23 of the flux concentration rings 21 and 22. The radial inner teeth 23 of the two flux concentration rings overlap in the axial direction. Referring to FIG. 15, there are four radial inner teeth 23 distributed at an equal interval. The radial inner teeth 23 concentrate flux facing the magnetic pole for the flux concentration rings 21 and 22. The acquisition planes 33 fully fall within the ring widths W of the flux concentration rings 21 and 22. The acquisition planes of the column-type bunchers fully fall within the ring widths of the flux concentration rings, and during radial vibration, the acquisition planes do not go beyond the ring widths of the flux concentration rings, so as to keep stability of flux on the acquisition planes. The remaining part of the structure and advantages are fully the same as those in Embodiment 1.

### Embodiment 3:

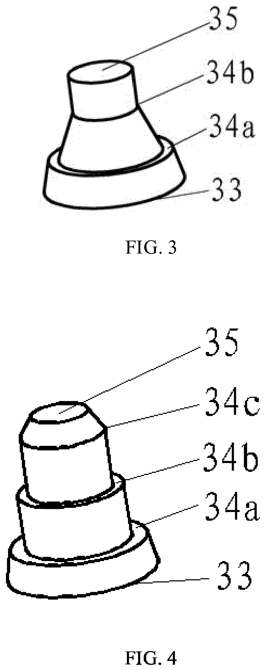

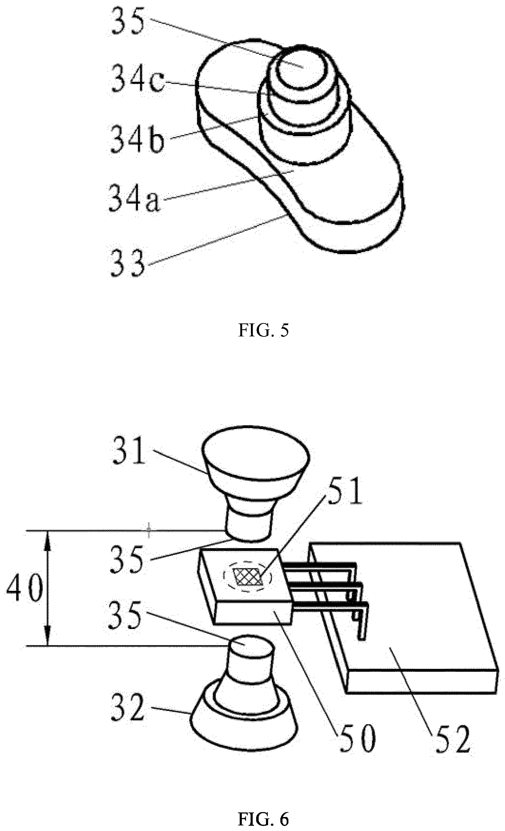

Referring to FIG. 2 to FIG. 5, as an improvement of the present invention, one bunch plane 34, referring to FIG. 2, or a plurality of bunch planes 34a, 34b, and 34c, referring to FIG. 3, is provided between the acquisition plane 33 and the focusing plane 35 of the column-type buncher, and is configured to narrow and enhance the density of the flux collected by the acquisition plane 33. FIG. 2 to FIG. 5 show various column-type bunchers. The column-type bunchers each have only one circular focusing plane 35. The acquisition plane 33 in FIG. 2, FIG. 3, and FIG. 4 is in a shape of a circle. The column-type buncher in FIG. 2 has one bunch plane 34. The column-type buncher in FIG. 3 has two bunch planes 34a and 34b. The column-type buncher in FIG. 4 has three bunch planes 34a, 34b, and 34c. The purpose of disposing a plurality of bunch planes is to further improve effectiveness of flux bunching. The bunch plane may be in a form of a cylinder or a conoid. FIG. 5 shows a transformation of the column-type buncher in FIG. 4. In FIG. 5, the acquisition plane 33 is in a shape of a sector. The area of the sector acquisition plane is greater than that of a circular acquisition plane, so as to acquire more flux. The remaining part of the structure and advantages are fully the same as those in Embodiment 1.

### Embodiment 4:

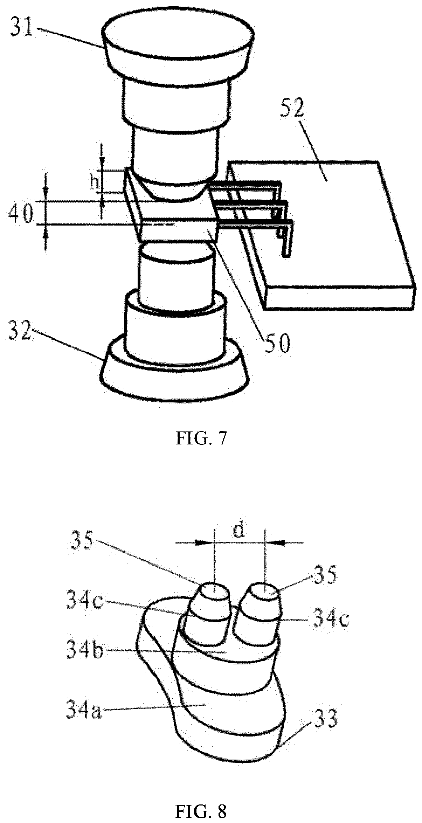

Referring to FIG. 6 and FIG. 7, as an improvement of the present invention, a magnetic sensitive element 50 is inserted into the measurement gap. The magnetic sensitive element includes a sensitive region 51. The area of the focusing plane 35 of the column-type buncher is greater than that of the sensitive region 51 of the magnetic sensitive element, to ensure that the focusing plane 35 fully covers the sensitive region 51. The measurement gap 40 between the focusing planes 35 of the two column-type bunchers is greater than or equal to the height h of the magnetic sensitive element. Referring to FIG. 6, the magnetic sensitive element 50 includes only one sensitive region 51. A SIP package is used, and a pin of the magnetic sensitive element 50 is arranged at a side surface of the package. A PCB 52 on which the pin of the magnetic sensitive element 50 is soldered may be disposed outside the measurement gap 40, and only the magnetic sensitive element 50 is inserted into the measurement gap 40. The sensitive region 51 of the magnetic sensitive element 50 in FIG. 6 is a rectangle. The dashed circle outside the rectangle is a projection of the focusing plane 35 of the column-type buncher. The diameter of the focusing plane 35 is greater than the rectangular diagonal of the sensitive region 51, to ensure that the focusing plane 35 fully covers the sensitive region 51. FIG. 7 shows application of the column-type buncher structure in FIG. 4. A magnetic sensitive element 50 is mounted in the measurement gap 40 between the focusing planes of the two column-type bunchers 31 and 32. The measurement gap 40 is approximately equal to the height h of the magnetic sensitive element. The remaining part of the structure and advantages are fully the same as those in Embodiment 1.

### Embodiment 5:

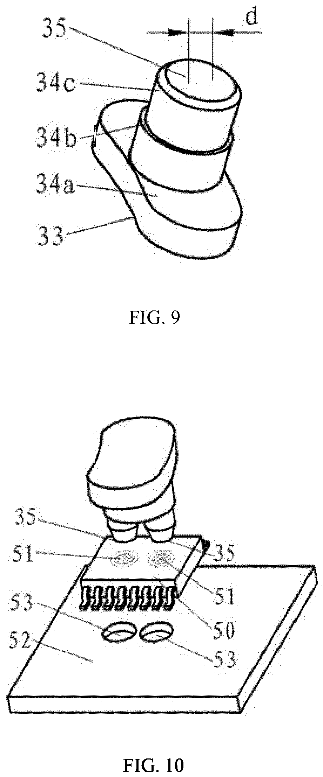

Referring to FIG. 2 to FIG. 5, FIG. 8, and FIG. 9, as an improvement of the present invention, for the column-type buncher, the acquisition plane 33 is larger than the bunch plane 34 or the plurality of bunch planes 34a, 34b, and 34c that is larger than the focusing plane 35. The acquisition plane, the bunch plane, and the focusing plane of the column-type buncher are designed in structures whose areas gradually decrease, so that after the density of the flux collected by the acquisition plane is narrowed and enhanced in multiple stages, the flux gathers in the sensitive region of the magnetic sensitive element, thereby improving the flux acquisition efficiency. The bunch plane is shaped into one of a cylinder or a conoid, and the acquisition plane 33 is shaped into one of a sector, a circle, an ellipse, or an irregular shape. There may be one or more focusing planes 35. FIG. 8 shows a transformation of the column-type buncher in FIG. 5. In FIG. 8, the number of focusing planes 35 is added to two. The center distance of the two focusing planes is set according to the center distance d of the sensitive regions 51 of the magnetic sensitive element 50. FIG. 9 shows a transformation of the column-type buncher in FIG. 8. In FIG. 9, the two focusing planes 35 in FIG. 8 are combined into one large focusing plane. The combined focusing plane in FIG. 9 is in a shape of a circle, but not limited to a circle, or may another shape such as an ellipse. This embodiment is applicable to a sensitive element 50 having two sensitive regions 51. The column-type buncher in FIG. 8 is especially applicable to a magnetic sensitive element having a relatively large center distance d. The column-type buncher in FIG. 9 is applicable to a magnetic sensitive element having a relatively small center distance d. The acquisition plane in this embodiment is in a shape of a sector, but not limited to a sector. The remaining part of the structure and advantages are fully the same as those in Embodiment 1.

### Embodiment 6:

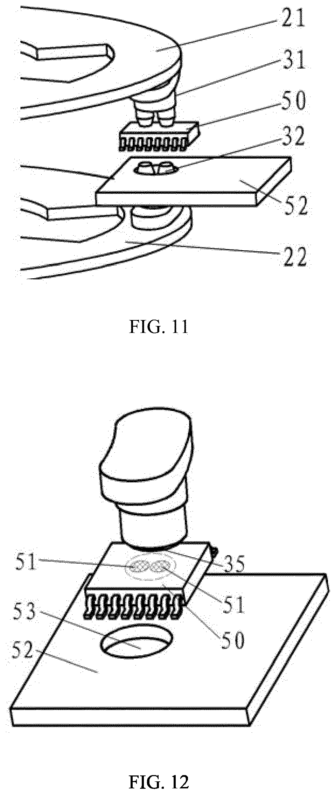

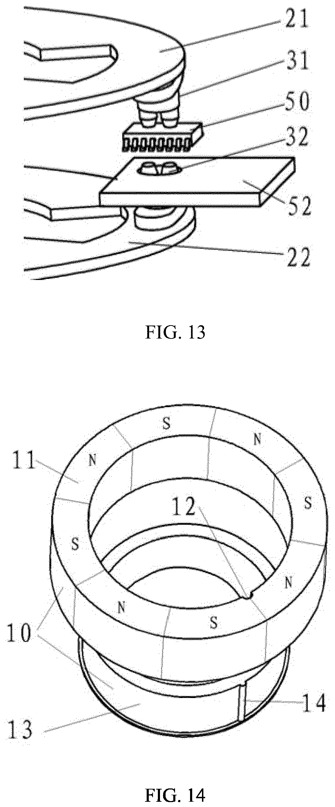

Referring to FIG. 10 to FIG. 13, FIG. 10 to FIG. 13 show application of another embodiment of the column-type buncher. The magnetic sensitive element 50 inserted into the measurement gap 40 includes two sensitive regions 51. An SOT package is used, pins of the magnetic sensitive element 50 are symmetrically distributed at two side surfaces of the package, and are soldered on a PCB 52 exactly below the magnetic sensitive element 50. As an improvement of the present invention, mounting through holes 53 are provided on the PCB 52, so that the focusing planes 35 of the flux bunchers 31 and 32 pass through the PCB 52, to reach the package surface of the magnetic sensitive element 50. In the prior art, no mounting through hole is designed on a PCB of a flux buncher, and a measurement gap is equal to the sum of the height of a magnetic sensitive element and the thickness of the PCB. Generally, the thickness of the PCB is close to the height of the magnetic sensitive element, and therefore, the measurement gap is approximately equal to twice of the height of the magnetic sensitive element, which is approximately twice of the measurement gap in Embodiment 4. A larger gap indicates a larger magnetic resistance, larger flux divergence, and a lower density of flux passing through a sensitive region of the magnetic sensitive element. As a result, the flux acquisition efficiency is lower. In the present invention, the PCB 52 is provided with the mounting through holes 53. The mounting through holes 53 correspond to the two sensitive regions of the magnetic sensitive element, so that the column-type bunchers are able to pass through the PCB, to eliminate impact of the thickness of the PCB on the measurement gap, thereby further improving the flux acquisition efficiency greatly. FIG. 10 shows a correspondence among the two sensitive regions of the magnetic sensitive element 50, the column-type bunchers in FIG. 8, and the PCB through holes. FIG. 11 is a schematic assembly diagram of FIG. 10. FIG. 12 shows a correspondence among the two sensitive regions of the magnetic sensitive element 50, the column-type bunchers in FIG. 9, and the PCB through holes. FIG. 13 is a schematic assembly diagram of FIG. 12. The remaining part of the structure and advantages are fully the same as those in Embodiment 1.

### Embodiment 8:

Referring to FIG. 14, as an improvement of the present invention, a fitting portion 12 is disposed on the multi-polar magnetic ring 11 of the magnetic rotor structure, and a fitting portion 14 is disposed on the bracket 13. The fitting portion 12 and the fitting portion 14 are shaped into a recess and a raised edge that fit with each other. The number of the fitting portions is greater than or equal to 1. The multi-polar magnetic ring and the bracket of the magnetic rotor include corresponding fitting portions that match with each other, and a magnetic pole reference position of the multi-polar magnetic ring is fixed by using the fitting portions, so that the production and assembly efficiency and product consistency of sensor can be improved. The remaining part of the structure and advantages are fully the same as those in Embodiment 1.

### Embodiment 9:

Referring to FIG. 1 and FIG. 16, as an improvement of the present invention, the coupling gaps between the acquisition planes of the column-type bunchers and the flux concentration rings are directly connected in series. During axial vibration, the two coupling gaps synchronously change along with the axial vibration, with reverse directions and identical magnitude, and the sum of the two coupling gaps is kept unchanged, so as to keep stability of flux on the acquisition plane. FIG. 16 is a schematic diagram of a magnetic circuit structure of a magnetic sensitive torque sensor, and shows a full view of the magnetic circuit structure. There are four coupling gaps 41 and one measurement gap 40 in a flux path. The coupling gaps in the magnetic path are directly connected in series. The measurement gap 40 is approximately equal to the height h of the magnetic sensitive element. The remaining part of the structure and advantages are fully the same as those in Embodiment 1.

At least one of the technical features in Embodiment 2, 3, 4, 5, 6, 7, 8, or 9 can be further combined with Embodiment 1 to form a new implementation in the present invention.

## Claims

1. A magnetic circuit structure of a magnetic sensitive torque sensor, wherein the magnetic circuit structure comprises a flux acquisition structure (30), a magnetic rotor structure (10), and a flux concentration rotor structure (20); the flux acquisition structure (30) comprises two column-type bunchers (31, 32) disposed at two sides of a measurement gap (40); the column-type buncher comprises one acquisition surface (33), at least one bunch surface (34), and at least one focusing surface (35); the magnetic rotor structure (10) comprises a multi-polar magnetic ring (11) and a bracket (13); the flux concentration rotor structure (20) comprises two flux concentration rings (21, 22); and the multi-polar magnetic ring (11) and the bracket (13) are disposed between the two flux concentration rings (21, 22) ;
**characterized in that**
the column-type bunchers (31, 32) are disposed in an annular space defined by the ring widths (W) of the flux concentration rings (21, 22) without extending outside the annular space;
the acquisition surfaces (33) of the column-type bunchers (31, 32) acquire, by means of coupling gaps (41), flux concentrated by radial inner teeth (23) of the flux concentration rings (21, 22), and the acquisition surfaces (33) fully fall within the ring widths (W) of the flux concentration rings (21, 22);
one bunch surface (34) or a plurality of bunch surfaces (34a, 34b, 34c) is provided between the acquisition surface (33) and the focusing surface (35) of the column-type buncher (31, 32);
a magnetic sensitive element (50) is inserted into the measurement gap (40), the magnetic sensitive element (50) comprises a sensitive region (51), and the area of the focusing surface (35) of the column-type buncher (31, 32) is greater than that of the sensitive region (51) of the magnetic sensitive element (50), to ensure that the focusing surface (35) fully covers the sensitive region (51);
and
for the column-type buncher (31, 32), the acquisition surface (33) is larger than the bunch surface (34) or the plurality of bunch surfaces (34a, 34b, 34c) that is larger than the focusing surface (35);wherein the two flux concentration rings (21, 22) are displaced from each other along the symmetry axis of one of the rings (21, 22) and the two flux concentration rings (21, 22) are centered on said symmetry axis, wherein said symmetry axis of the one of the rings is perpendicular to the parallel plane spanned by the one of the two rings (21, 22); and
wherein the two flux concentration rings (21, 22) are of the same outer radius and are of the same ring width.

2. The magnetic circuit structure of the magnetic sensitive torque sensor according to claim 1, wherein the measurement gap (40) between the focusing surfaces (35) of the two column-type bunchers (31, 32) is greater than or equal to the height (h) of the magnetic sensitive element (50).

3. The magnetic circuit structure of the magnetic sensitive torque sensor according to claim 1, wherein when a PCB on which the magnetic sensitive element (50) is soldered is inserted into the measurement gap (40), mounting through holes (53) are provided on the PCB (52), so that the focusing surfaces (35) of the flux bunchers (31, 32) pass through the PCB (52), to reach a package surface of the magnetic sensitive element (50).

4. The magnetic circuit structure of the magnetic sensitive torque sensor according to claim 2, wherein a fitting portion (12) is disposed on the multi-polar magnetic ring (11) of the magnetic rotor structure (10), and a fitting portion (14) is disposed on the bracket (13); the fitting portion (12) and the fitting portion (14) are shaped into a recess and a raised edge that fit with each other; and the number of the fitting portions is greater than or equal to 1.

5. The magnetic circuit structure of the magnetic sensitive torque sensor according to claim 3, wherein the coupling gaps between the acquisition surfaces of the column-type bunchers (31, 32) and the flux concentration rings (21, 22) are directly connected in series, the bunch surface is shaped into one of a cylinder or a conoid, and the acquisition surface is shaped into one of a sector, a circle, an ellipse, or an irregular shape.

## Patentansprüche

1. Magnetkreisstruktur eines magnetosensitiven Drehmomentsensors, umfassend eine magnetische Flusserfassungsstruktur (30), eine magnetische Rotorstruktur (10) und eine magnetische Flusskonzentrationsrotorstruktur (20), **dadurch gekennzeichnet, dass** die magnetische Flusserfassungsstruktur (30) zwei auf beiden Seiten eines Messspalts (40) angeordnete säulenartige Bündler (31, 32) umfasst, welche jeweils eine Erfassungsfläche (33), zumindest eine Bündelungsfläche (34) und zumindest eine Fokussierfläche (35) umfassen, während die magnetische Rotorstruktur (10) einen mehrpoligen Magnetring (11) und einen Träger (13) und die magnetische Flusskonzentrationsrotorstruktur (20) zwei magnetische Flusskonzentrationsringe (21, 22) umfasst, wobei sich der mehrpolige Magnetring (11) und der Träger (13) zwischen den beiden magnetischen Flusskonzentrationsringen (21, 22) befinden, während der säulenartige Bündler (31, 32) in einem durch eine Ringbreite (W) des magnetischen Flusskonzentrationsrings (21, 22) definierten Ringraum angeordnet ist und sich nicht aus dem Ringraum heraus erstreckt, wobei
- die Erfassungsfläche (33) des säulenartigen Bündlers (31, 32) durch einen Kopplungsspalt (41) den von einem radialen Innenzahn (23) des magnetischen Flusskonzentrationsrings (21, 22) konzentrierten magnetischen Fluss erfasst, wobei die Erfassungsfläche (33) vollständig durch die Ringbreite (W) des magnetischen Flusskonzentrationsrings (21, 22) abgedeckt ist;
- zwischen der Erfassungsfläche (33) und der Fokussierfläche (35) des säulenartigen Bündlers (31, 32) eine einzige Bündelungsfläche (34) oder mehrere Bündelungsflächen (34a, 34b, 34c) vorhanden ist oder sind;
- in dem Messspalt (40) ein magnetosensitives Element (50) eingesteckt ist, das einen sensitiven Bereich (51) aufweist, wobei die Fläche der Fokussierfläche (35) des säulenartigen Bündlers (31, 32) größer als die Fläche des sensitiven Bereiches (51) des magnetosensitiven Elements (50) ist, um eine vollständige Abdeckung des sensitiven Bereiches (51) durch die Fokussierfläche (35) sicherzustellen;
- die Erfassungsfläche (33) des säulenartigen Bündlers (31, 32) größer als die Bündelungsfläche (34) ist oder die mehreren Bündelungsflächen (34a, 34b, 34c) größer als die Fokussierfläche (35) sind;
- die beiden magnetischen Flusskonzentrationsringe (21, 22) symmetrisch angeordnet sind und sich entlang der Symmetrieachse verlagern, wobei die Symmetrieachse senkrecht zu einer die beiden magnetischen Flusskonzentrationsringe (21, 22) durchquerenden parallelen Fläche verläuft;
- die beiden magnetischen Flusskonzentrationsringe (21, 22) den gleichen Außendurchmesser und die gleiche Ringbreite haben.

2. Magnetkreisstruktur eines magnetosensitiven Drehmomentsensors nach Anspruch 1, **dadurch gekennzeichnet, dass** der Messspalt (40) zwischen den Fokussierflächen (35) der beiden säulenartigen Bündler (31, 32) größer oder gleich einer Höhe (h) des magnetosensitiven Elements (50) ist.

3. Magnetkreisstruktur eines magnetosensitiven Drehmomentsensors nach Anspruch 1, **dadurch gekennzeichnet, dass** für den Fall, dass in dem Messspalt (40) eine Leiterplatte, an der das magnetosensitive Element (50) angeschweißt ist, eingesteckt ist, die Leiterplatte (52) mit einem Montagedurchgangsloch (53) versehen ist, über das die Fokussierfläche (35) des säulenartigen Bündlers (31, 32) durch die Leiterplatte (52) hindurch bis an die Montagefläche des magnetosensitiven Elements (50) gelangt.

4. Magnetkreisstruktur eines magnetosensitiven Drehmomentsensors nach Anspruch 2, **dadurch gekennzeichnet, dass** an dem mehrpoligen Magnetring (11) der magnetischen Rotorstruktur (10) ein Eingriffsabschnitt (12) und an dem Träger (13) ein Eingriffsabschnitt (14) vorgesehen ist, wobei der Eingriffsabschnitt (12) und der Eingriffsabschnitt (14) als Rille und Rippe, welche ineinandergreifen, ausgebildet sind und die Anzahl des Eingriffsabschnitts ≥1 ist.

5. Magnetkreisstruktur eines magnetosensitiven Drehmomentsensors nach Anspruch 3, **dadurch gekennzeichnet, dass** es sich bei dem Kopplungsspalt zwischen der Erfassungsfläche des säulenartigen Bündlers (31, 32) und dem magnetischen Flusskonzentrationsring (21, 22) um eine einzelne Reihenschaltungsstruktur handelt, wobei die Bündelungsfläche entweder als Zylinder oder als Kegel und die Erfassungsfläche als eine der Formen Fächerform, Kreisform, Oval, unregelmäßige Form ausgebildet ist.

## Revendications

1. Une structure de circuit magnétique d'un capteur de couple magnéto-sensible, ladite structure de circuit magnétique comprend une structure de collecte de flux magnétique (30), une structure de rotor magnétique (10) et une structure de rotor de concentration de flux magnétique (20), **caractérisée en ce que**, ladite structure de collecte de flux magnétique (30) comprend deux concentrateurs en colonne (31, 32) agencés des deux côtés d'un interstice de mesure (40), lesdits concentrateurs en colonne comprenant une surface de collecte (33), au moins une surface de concentration (34) et au moins un plan focal (35), ladite structure de rotor magnétique (10) comprenant un anneau magnétique multipolaire (11) et un support (13), ladite structure de rotor de concentration de flux magnétique (20) comprenant des anneaux de concentration de flux magnétique (21, 22), ledit anneau magnétique multipolaire (11) et ledit support (13) étant agencés entre les anneaux de concentration de flux magnétique (21, 22) ; lesdits concentrateurs en colonne (31, 32) étant agencés dans l'espace circulaire délimité par la largeur annulaire (W) des anneaux de concentration de flux magnétique (21, 22), sans étirement en dehors de l'espace annulaire ;
la surface de collecte (33) desdits concentrateurs en colonne (31, 32) collecte le flux magnétique concentré par les dents internes radiales (23) des anneaux de concentration de flux magnétique (21, 22) via l'interstice de couplage (41), ladite surface de collecte (33) étant entièrement couverte par la largeur (W) des anneaux de concentration de flux magnétique (21, 22) ;
une surface de concentration (34) ou une pluralité de surfaces de concentration (34a, 34b, 34c) se trouve entre la surface de collecte (33) desdits concentrateurs en colonne (31, 32) et le plan focal (35) ;
un élément magnéto-sensible (50) est inséré dans ledit interstice de mesure (40), ledit élément magnéto-sensible (50) étant doté d'une zone magnéto-sensible (51), la surface du plan focal (35) desdits concentrateurs en colonne (31, 32) étant supérieure à la surface de la zone magnéto-sensible (51) de l'élément magnéto-sensible (50), assurant une couverture intégrale de la zone magnéto-sensible (51) du plan focal (35) ;
la surface de collecte (33) desdits concentrateurs en colonne (31, 32) est > à la surface de concentration (34) ou la pluralité de surfaces de concentration (34a, 34b, 34c) est > au plan focal (35) ;
lesdits anneaux de concentration de flux magnétique (21, 22) sont agencés symétriquement, et se déplacent le long de l'axe de symétrie, ledit axe de symétrie étant perpendiculaire aux plans parallèles traversant les anneaux de concentration de flux magnétique (21, 22) ;
lesdits anneaux de concentration de flux magnétique (21, 22) sont dotés de diamètres externes et de largeurs identiques.

2. Une structure de circuit magnétique d'un capteur de couple magnéto-sensible selon la revendication 1, **caractérisée en ce que** : l'interstice de mesure (40) entre les plans focaux (35) desdits concentrateurs en colonne (31, 32) est supérieur ou égal à la hauteur (h) de l'élément magnéto-sensible (50).

3. Une structure de circuit magnétique d'un capteur de couple magnéto-sensible selon la revendication 1, **caractérisée en ce que** : lorsqu'une carte de circuit imprimé de l'élément magnéto-sensible (50) est insérée et soudée à l'interstice de mesure (40), la carte de circuit imprimé (52) est dotée d'un trou traversant d'installation (53), afin que les plans focaux (35) desdits concentrateurs de flux magnétique (31, 32) traversent la carte de circuit imprimé (52) pour atteindre la face empaquetée de l'élément magnéto-sensible (50).

4. Une structure de circuit magnétique d'un capteur de couple magnéto-sensible selon la revendication 2, **caractérisée en ce que** : une partie d'ajustement (12) est agencée sur l'anneau magnétique multipolaire (11) de ladite structure de rotor magnétique (10), une partie d'ajustement (14) est agencée sur le support (13), dans laquelle la partie d'ajustement (12) et la partie d'ajustement (14) sont conçues en une gorge concave et une arrête protubérante s'ajustant mutuellement, le nombre desdites parties d'ajustement étant ≥ à 1.

5. Une structure de circuit magnétique d'un capteur de couple magnéto-sensible selon la revendication 3, **caractérisée en ce que** : l'interstice de couplage entre la surface de collecte desdits concentrateurs en colonne (31, 32) et les anneaux de concentration de flux magnétique (21, 22) est une structure sériée unique ; ladite surface de concentration est conçue en un corps cylindrique ou un corps conique, ladite surface de collecte est conçue de forme d'éventail, de forme circulaire, de forme elliptique ou de forme graphiquement irrégulière.
